# EUROPEAN PATENT APPLICATION

(11) **EP 2 650 648 A2**
(43) Date of publication of application: **16.10.2013**
(21) Application number: 12196311.0
(22) Date of filing: 10.12.2012
(51) Int. Cl.: G01C 21/32

(54) **Map data update method for updating map data of navigation**

(30) Priority: 13.04.2012 KR 20120038259
(71) Applicant: Hyundai Mnsoft, Inc., Seoul 140-711 (KR)
(72) Inventor: Chang, Jun, 140-711 Seoul (KR)
(74) Representative: Viering, Jentschura & Partner

(57) **Abstract**

A method for updating map data (320) of a navigation includes downloading map data for update from a map data server (200) to an update database (DB); determining whether the update manager uses a map data DB; and postponing, by the update manager, update of the map data DB when the map data DB is used. Further, the method includes updating, by the update manager, the map data DB with the map data for update when a vehicle-start end message is received from a vehicle controller, the map data being stored in the update DB.

## Description

### Field of the Invention

The present invention relates to a map data update method for updating map data of a navigation; and more particularly, to a map data update method for updating map data of a navigation, which is capable of storing map data transmitted from an update server for update in a separate storage unit, and updating a map data database (DB) with the map data stored in the separate storage unit of a navigation for update after a user's request or the start of a vehicle is ended.

### Background of the Invention

In terms of update, a method of partially updating map data for navigation is largely categorized into two methods. One of the two methods is a method that updates a map data DB in real time as soon as map data for update is received from an update server, and the other is a method that stores map data for update, received from an update server, in a storage medium and then allows a user to determine an update time or automatically updates a navigation with the received map data. However, in the first method, when an update manager is updating a map data DB, a navigation may access a corresponding record at the same time. To stably control (simultaneity and integrity) this limitation, the mobile database management system (DBMS) needs to provide a table-unit or record-unit locking technique.

On the other hand, it is required to maximally lighten a system in order for the mobile DBMS to maximally speed up under limited performance, and thus, the mobile DBMS may not provide the table-unit or record-unit locking technique. Even though the mobile DBMS provides the table-unit or record-unit locking technique, system performance is degraded.

To overcome this limitation, therefore, when an update manager updates map data, a navigation releases a connection between the navigation and a corresponding map data DB, and stands by until the update manager sends an update completion message to the navigation.

Moreover, this case may become a limitation when a user intends to use the navigation.

### Summary of the Invention

In view of the above, the present invention provides a map data update method for updating map data of a navigation, which is capable of storing the map data for update in a storage medium and allowing a user to determine an update time or automatically updating the map data of the navigation.

Further, the present invention provides a map data update method for updating map data of a navigation, which is capable of restricting the update of a map data DB when the navigation is connected to the map data DB and, when the navigation is disconnected from the map data DB, accessing and updating the map data DB.

Further, the present invention provides the map data update method for updating map data of a navigation, which is capable of solving a problem caused when an update manager and a navigation simultaneously access a record of the map data DB while the navigation is connected to the map data DB.

Further, the present invention provides the map data update method for updating the map data of the navigation, which is capable of controlling the update of the map data DB when the navigation is operating, thus preventing the degradation of the operation performance of the navigation.

Further, the present invention provides a map data update method for updating the map data of the navigation, in which when the start of a vehicle is ended, a vehicle controller sends a vehicle-start end message to an update manager of a navigation, and the update manager receives the vehicle-start end message to update a map data DB with map data stored in a storage medium for update.

In accordance with an embodiment of the present invention, there is provided a method for updating map data of a navigation, including: downloading map data for update from a map data server to an update database (DB); determining whether the update manager uses a map data DB; postponing, by the update manager, update of the map data DB when the map data DB is used; and updating, by the update manager, the map data DB with the map data for update when a vehicle-start end message is received from a vehicle controller, the map data being stored in the update DB.

In accordance with the present invention, it is possible to store map data for update in a storage medium, and allow a user to determine an update time or automatically updates map data of a navigation, thus preventing the operation performance of the navigation from being degraded when the navigation is operating.

Moreover, when a navigation is connected to a map data DB, the present invention restricts the update of the map data DB, and, when the navigation is disconnected from the map data DB, the present invention accesses and updates the map data DB, it is possible to prevent the operation performance of the navigation from being degraded when the navigation is operating.

Moreover, the present invention may solve a problem caused when an update manager and a navigation simultaneously access a record of a map data DB while the navigation is connected to the map data DB.

Moreover, when the start of a vehicle is ended, the vehicle controller sends a vehicle-start end message to the update manager of the navigation, and the update manager receives the vehicle-start end message to update the map data DB with map data stored in the storage medium for update, thus preventing the performance of the map data DB from being unnecessarily degraded when the navigation is being used.

### Brief Description of the Drawings

The objects and features of the present invention will become apparent from the following description of embodiments given in conjunction with the accompanying drawings, in which:
Fig. 1 is a block diagram illustrating a navigation for updating a map data DB in accordance with an embodiment of the present invention; and
Fig. 2 is a flow chart illustrating the map data update method for updating the map data DB in accordance with the embodiment of the present invention.

### Detailed Description of the Embodiments

Terms or words used in the specification and claims should not be limited and construed as common or dictionary meanings, and should be construed as meanings and concepts based on the principle that the inventor can appropriately define the concept of each term for describing the invention in the best way.

Therefore, embodiments described in the specification and configurations illustrated in the drawings are merely embodiments of the present invention and do not represent the technical spirit and scope of the present invention, and thus, it need to be understood that the present invention covers all the modifications, equivalents, and replacements within the idea and technical scope of the present invention.

Hereinafter, embodiments of the present invention will be described in detail with reference to the accompanying drawings which form a part hereof.

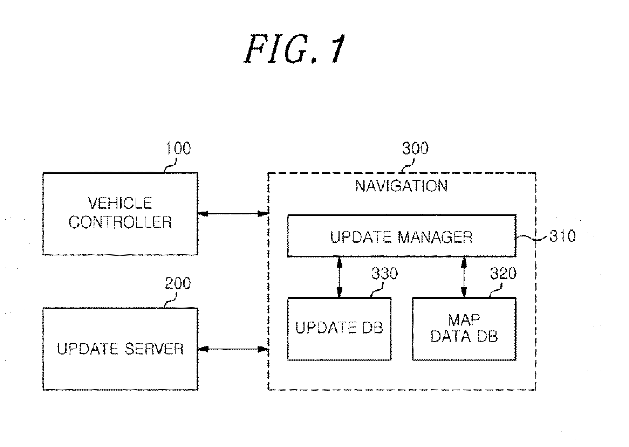

Fig. 1 is a block diagram illustrating a navigation for updating a map data DB in accordance with present invention.

As shown in Fig. 1, a navigation 300 is disposed in a vehicle, and connected to a vehicle controller 100 to perform wired or wireless communication with the vehicle controller 100. Further, the navigation 300 is connected to an update server 200 to enable the wireless communication, and receives map data for update from the update server 200 which is disposed at a remote position.

In this case, the navigation 300 may be partially or overall updated with map data for update received from the update server 200.

The navigation 300 may include an update DB 330 that receives and stores map data transmitted from the update server 200, and an update manager 310 that updates the map data DB 320 with the map data stored in the update DB 330 for update. Here, the map data DB 320 may store map data used in the navigation 300.

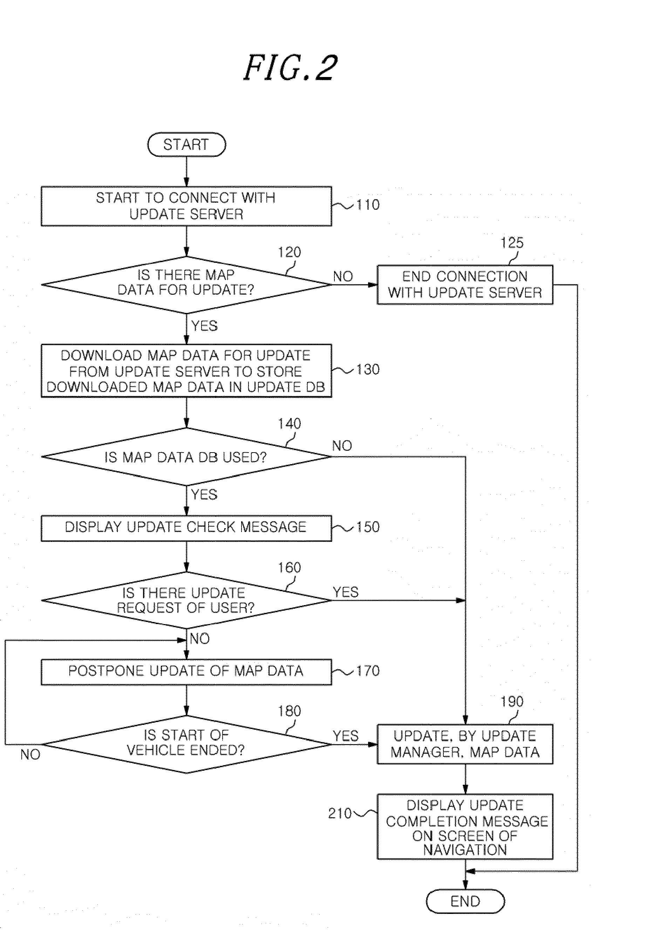

Fig. 2 is a flow chart illustrating a map data update method for updating a map data DB in accordance with present invention.

Referring to Fig. 2, when the navigation 100 becomes connected to the update server 200 in operation 110, the navigation 300 gets a check result of a version of stored map data from the update server 200, and determines whether the map data for update is stored in the update server 200 in operation 120. Alternatively, the update server 200 may check a version of the map data stored in the navigation 300 connected thereto.

As a determination in operation 120, if it is determined that there is no map data for update which is to be received from the update server 200, the navigation 300 ends a connection with the update server 200 in operation 125. On the other hand, if it is determined that the map data for update is stored in the update server 200, the navigation 300 or the update manager 310 downloads the map data for update from the update server 200 to store the downloaded map data in the update DB 330 in operation 130. Here, the navigation 300 sends a download completion message of update map data to the update manager 310 only when the navigation 300 downloads the map data for update from the update server 200.

The update manager 310 receives the download completion message, and determines whether the navigation 300 uses the map data DB 320 in operation 140. If it is determined that the navigation 300 does not use the map data DB 320 in operation 140, the update manager 310 updates the map data DB 320 with the map data stored in the update DB 330 for update in operation 190. On the other hand, if it is determined that the navigation 300 uses the map data DB 320 in operation 140, the update manager 310 displays an update check message, checking whether the reception of the map data for update is completed and perform update, on a screen of the navigation 300 in operation 150.

When a user input is received in response to the update check message, the update manager 310 determines whether there is update request of a user in operation 160. If it is determined that there is the update request of the user, i.e., an update request is received from the user in operation 160, the update manager 310 updates the map data DB 320 with the map data stored in the update DB 330 for update in operation 190. On the other hand, if it is determined that there is not the update request of the user, i.e., a request for update postponement is received from the user in operation 160, the update manager 310 postpones the update of the map data DB 320 in operation 170.

In this case, the user input may be performed as a screen touch input corresponding to a message that is displayed on the screen of the navigation 300, but is not limited thereto.

After operation 170, the update manager 310 waits for the reception of a vehicle-start end message from the vehicle controller 100 and determines whether start of a vehicle is ended in operation 180. If it is determined that the start of the vehicle is ended since the vehicle-start end message is received from the vehicle controller 100 in operation 180, the update manager 310 updates the map data DB 320 with the map data stored in the update DB 330 for update in operation 190.

On the other hand, if it is determined that the start of the vehicle is not ended since the vehicle-start end message is not received from the vehicle controller 100 in operation 180, the control step goes back to operation 170 and the update manager 310 postpones the update of the map data DB 320. When the update of the map data DB 320 is completed, the update manager 310 displays an update completion message on the screen of the navigation 300 and the navigation is driven again in operation 210.

Here, in a case where the update manager 310 receives the vehicle-start end message and updates map data for update, the update manager 310 may perform an update with reserve power of a vehicle or the navigation that is maintained for a certain time even after the start of a vehicle is ended.

The update manager 310 compares a time for which the map data DB 320 is updated with the map data for update and a time for which the reserve power of the vehicle or the navigation is maintained after the start of the vehicle is ended, and, when the update time is longer than the reserve power maintenance time of the vehicle or the navigation, the update manager 310 updates the map data DB 320. On the other hand, when the update time is shorter than the reserve power maintenance time of the vehicle or the navigation, the update manager 310 does not update the map data DB 320.

The map data DB 320 is not updated, and then, when the navigation 300 is again driven, the update manager 310 may again perform operations from operation 140 for updating map data for update.

Even when the update time is shorter than the reserve power maintenance time of the vehicle or the navigation, the update manager 310 may segment map data for update, and sequentially update the map data DB 320 with the differential map data for update, i.e., updated map data of the map data DB 320 within the vehicle-reserve power maintenance time.

While the invention has been shown and described with respect to the embodiments, the present invention is not limited thereto. It will be understood by those skilled in the art that various changes and modifications may be made without departing from the scope of the invention as defined in the following claims.

## Claims

1. A method for updating map data of a navigation, comprising:
downloading map data for update from a map data server to an update database (DB);
determining whether the update manager uses a map data DB;
postponing, by the update manager, update of the map data DB when the map data DB is used; and
updating, by the update manager, the map data DB with the map data for update when a vehicle-start end message is received from a vehicle controller, the map data being stored in the update DB.

2. The method of claim 1, wherein said downloading map data for update is performed by one of the navigation or the update manager.

3. The method of claim 2, wherein, when said downloading map data for update is performed by the navigation, the navigation sends a download completion message to the update manager before said determining whether the update manager uses a map data DB.

4. The method of claim 1, wherein said postponing update of the map data DB includes:
displaying, by the update manager, an update check message for checking whether to perform an update on a screen of the navigation when the navigation uses the map data DB; and
postponing, by the update manager, update of the map data and waiting for reception of the vehicle-start end message from the vehicle controller when a request for update postponement is inputted from a user,
wherein when an update request is inputted from the user after the displaying, the update manager updates the map data DB with the map data, stored in the update DB, for update.

5. The method of claim 4, further comprising performing operation in which when the update of the map data DB is completed, the update manager sends an update completion message associated with the update of the map data DB to the navigation, and the navigation displays update completion on the screen of the navigation in response to the update completion message.

6. The method of claim 1, wherein said updating the map data DB is performed with reserve power of the vehicle or the navigation after the start of the vehicle is ended.

7. The method of claim 4, wherein when the updating of the map data DB with the map data for update is completed, the navigation is driven again.

8. The method of claim 1, wherein the map data is partially or overall updated.

9. The method of claim 6, wherein when a time for which the reserve power is maintained is shorter than a time for which the map data DB is updated with the map data for update, the update manager postpones the update.

10. The method of claim 6, wherein when a time for which the reserve power is maintained is shorter than a time for which the map data DB is updated with the map data for update, the update manager segments the map data for update, and sequentially updates the map data DB with a differential map data for update within the reserve power maintenance time.

11. The method of claim 4, wherein when update postponement or update is requested by the user, a user input is performed by touching the screen of the navigation.
